# EUROPEAN PATENT APPLICATION

(11) **EP 2 252 060 A2**
(43) Date of publication of application: **17.11.2010**
(21) Application number: 09718618.3
(22) Date of filing: 10.03.2009
(51) Int. Cl.: H04N 7/24

(54) **IMAGE ENCODING DEVICE AND IMAGE DECODING DEVICE**

(30) Priority: 10.03.2008 KR 20080022155
(71) Applicant: Samsung Electronics Co., Ltd., Suwon-si, Gyeonggi-do 442-742 (KR)
(72) Inventor: CHOI, Woong-Il, Yongin-si Gyeonggi-do 446-712 (KR); KIM, Dae-Hee, Yongin-si Gyeonggi-do 446-712 (KR); CHO, Dae-Sung, Yongin-si Gyeonggi-do 446-712 (KR)
(74) Representative: D'Halleweyn, Nele Veerle Trees Gertrudis
(86) International application number: PCT/KR2009/001177
(87) International publication number: WO 2009/113791

(57) **Abstract**

The present invention provides an image encoding device and an image decoding device. An image encoding device comprises: a predictive encoding unit for subjecting input images to predictive encoding and thereby producing residue images; a transformation unit for transforming the residue images into transformation block units and thereby producing transformation coefficient values; a quantization unit for the quantization of the transformation coefficient values of the transformation blocks; and an entropy encoding unit for determining the scanning sequence on the basis of significance in each position of the transformation blocks and scanning the quantized transformation coefficient values of the transformation blocks in the determined scanning sequence and thereby generating the transformation coefficient values of one-dimensional arrays and effecting entropy encoding of the transformation coefficient values of the one-dimensional arrays.

## Description

### TECHNICAL FIELD

One or more embodiments of the present invention relate to image encoding and decoding, and more particularly, to an image encoding device and an image decoding device, by which entropy coding efficiency of transformation coefficient values is improved.

### BACKGROUND ART

In general, when a still image or a video image is coded, quantized transformation coefficient values are arranged by scanning the transformation coefficient values in a certain pattern and then run-length coding is performed on the arranged transformation coefficient values. Most image coding standards use a zigzag scanning pattern. The zigzag scanning pattern arranges from low frequency components to high frequency components and thus a low frequency band in which transformation coefficient values have a high possibility to exist, is firstly scanned. Accordingly, the zigzag scanning pattern is advantageous for run-length coding. After a certain block is completely scanned, information indicating that a given transformation coefficient value is the last transformation coefficient value, is provided when entropy coding is performed. Accordingly, the last transformation coefficient value is rapidly found through a scanning operation and coding efficiency is improved.

In general, an image signal includes a relatively small number of high frequency components and thus when a high frequency component is quantized, the high frequency component has a value 0 in most cases. That is, transformation coefficient values have a low possibility to exist in a high frequency region and thus, if the zigzag scanning pattern arranging from low frequency components to high frequency components, is used, entropy coding efficiency may be improved by not coding components having a value 0, which mostly exist in the high frequency region. Accordingly, in order to improve the entropy coding efficiency as described above, a scanning sequence needs to be determined so as to firstly scan a position in which transformation coefficient values have a low possibility to have a value 0, as long as possible.

### DESCRIPTION OF THE DRAWINGS

FIG. 1 is a structural block diagram of an entropy encoding device according to an embodiment of the present invention.
FIG. 2 is a structural block diagram of an entropy decoding device according to an embodiment of the present invention.
FIG. 3 is a diagram for describing operation of a scanning sequence determining unit illustrated in FIG. 1, according to an embodiment of the present invention.
FIG. 4 is a diagram for describing operation of the scanning sequence determining unit illustrated in FIG. 1, according to another embodiment of the present invention.
FIG. 5 is a table for describing a method of setting initial weights to be used by a significance correction unit illustrated in FIG. 1 or FIG. 2.
FIG. 6 is a structural block diagram of an image encoding device according to an embodiment of the present invention.
FIG. 7 is a structural block diagram of an image decoding device according to an embodiment of the present invention.
FIG. 8 is a structural block diagram of an image encoding device according to another embodiment of the present invention.
FIG. 9 is a structural block diagram of an image decoding device according to another embodiment of the present invention.

### DETAILED DESCRIPTION OF THE INVENTION

One or more embodiments of the present invention include an image encoding device and an image decoding device, by which entropy coding efficiency of transformation coefficient values is improved by adaptively determining a scanning sequence on the basis of significance of each transformation coefficient value in accordance with a position.

To achieve the above and/or other aspects and advantages, one or more embodiments of a first aspect of the present invention may include an image entropy encoding device comprising a scanning unit to scan transformation coefficient values of a transformation block in accordance with a scanning sequence so as to arrange the transformation coefficient values in a one-dimensional array, a significance coefficient scanning unit to check significance of the transformation coefficient values of the one-dimensional array, a significance correction unit to correct weights of the transformation coefficient values in accordance with positions, by using the significance checked by the significance coefficient scanning unit, and a scanning sequence determining unit to determine the scanning sequence from a position having a large weight to a position having a small weight in the transformation block, on the basis of the corrected weights.

To achieve the above and/or other aspects and advantages, one or more embodiments of a second aspect of the present invention may include an image entropy decoding device comprising an inverse scanning unit to inversely scan transformation coefficient values of a one-dimensional array, which are restored from a bitstream, in accordance with an inverse scanning sequence so as to generate quantized transformation coefficient values of a transformation block, a significance coefficient scanning unit to check significance of the quantized transformation coefficient values of the transformation block, a significance correction unit to correct weights of the transformation coefficient values in accordance with positions, by using the significance checked by the significance coefficient scanning unit, and an inverse scanning sequence determining unit to determine the inverse scanning sequence from a position having a large weight to a position having a small weight in the transformation block, on the basis of the corrected weights.

To achieve the above and/or other aspects and advantages, one or more embodiments of a third aspect of the present invention may include an image decoding device comprising, an entropy decoding unit to perform entropy decoding on a bitstream so as to restore quantized transformation coefficient values of a one-dimensional array, to determine an inverse scanning sequence on the basis of significance in each position of a transformation block, and to inversely scan the quantized transformation coefficient values of the one-dimensional array in the determined inverse scanning sequence so as to generate quantized transformation coefficient values of the transformation block, an inverse quantization unit to inversely quantize the quantized transformation coefficient values of the transformation block so as to restore transformation coefficient values of the transformation block, an inverse transformation unit to inversely transform the transformation coefficient values of the transformation block so as to restore a residue image, and a prediction decoding unit to perform prediction decoding on the residue image so as to generate a reconstructed image.

According to preferred embodiments of the third aspect of the present invention the entropy decoding unit comprises:
a variable-length decoding unit to perform variable-length decoding on a bitstream so as to restore run-length symbols;
a run-length decoding unit to perform run-length decoding on the run-length symbols so as to restore transformation coefficient values of the one-dimensional array; and
a significance-based inverse scanning unit to correct weights of a current transformation block in accordance with positions from information on significance of transformation coefficient values of at least one previous transformation block, to determine an inverse scanning sequence of the transformation coefficient values of the current transformation block on the basis of the corrected weights, and to inversely scan the transformation coefficient values of the one-dimensional array in accordance with the determined inverse scanning sequence so as to generate the transformation coefficient values of the current transformation block.

According to preferred embodiments of the third aspect of the present invention the significance-based inverse scanning unit groups a position of each transformation coefficient value of the transformation block into one of a plurality of scanning groups by using the corrected weights and a plurality of threshold values, and determines the inverse scanning sequence of the scanning groups from a scanning group having a large weight to a scanning group having a small weight.

According to preferred embodiments of the third aspect of the present inventionif a plurality of positions in the same scanning group have the same weight, transformation coefficient values at the positions are inversely scanned in accordance with a raster scanning sequence.

According to preferred embodiments of the third aspect of the present invention the significance-based inverse scanning unit has initial weights, and information on the initial weights is transmitted in a bitstream.

According to preferred embodiments of the third aspect of the present invention the information on the initial weights is transmitted in one of sequence units, picture units, frame units, and block units.

As a scanning sequence is adaptively determined on the basis of significance of transformation coefficient values in accordance with positions, entropy coding efficiency of the transformation coefficient values may be improved.

Reference will now be made in detail to embodiments, examples of which are illustrated in the accompanying drawings.

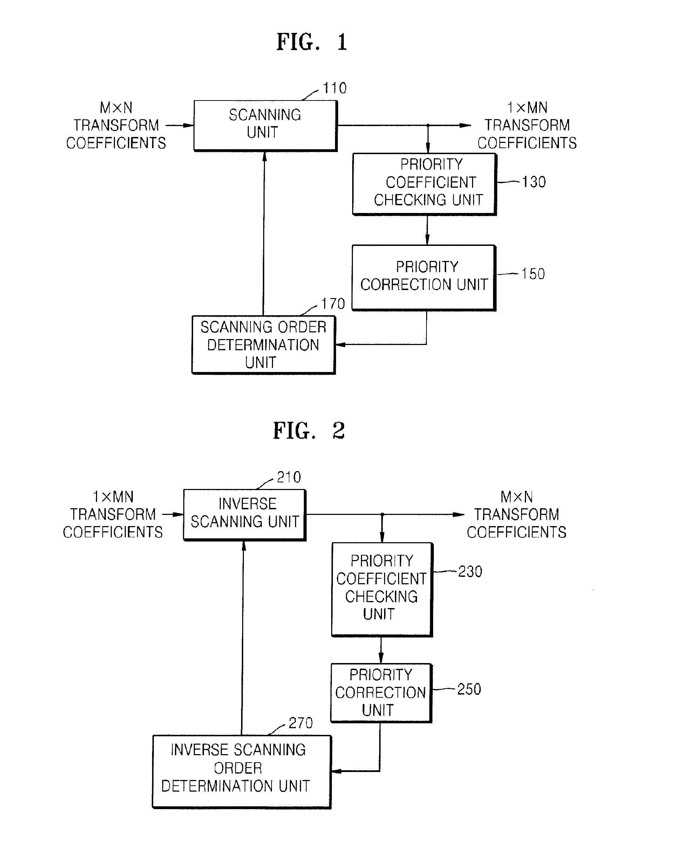

FIG. 1 is a structural block diagram of an image entropy encoding device according to an embodiment of the present invention. The image entropy encoding device illustrated in FIG. 1 includes a scanning unit 110, a significance coefficient scanning unit 130, a significance correction unit 150, and a scanning sequence determining unit 170. Here, the scanning unit 110, the significance coefficient scanning unit 130, the significance correction unit 150, and the scanning sequence determining unit 170 may be implemented as at least one processor.

Referring to FIG. 1, the scanning unit 110 scans transformation coefficient values of a current MxN block in accordance with a scanning sequence determined by the scanning sequence determining unit 170, with reference to previous M×N blocks, so as to arrange the transformation coefficient values in a one-dimensional array having a size of 1 ×MN. The transformation coefficient values arranged in the one-dimensional array are used to perform run-length encoding. Here, the transformation coefficient values may be generated by using a discrete cosine transform (DCT) method, a discrete Hadamard transform (DHT) method, or a discrete Walsh transform (DWT) method. However, methods of generating the transformation coefficient values are not limited to the above-mentioned methods. Also, the M×N block may have various sizes such as 32×32, 32×16, 16×32, 16×16, 16×8, 8×16, 8×8, and 4×4. Hereinafter, an 8×8 block will be representatively described for convenience of explanation.

The significance coefficient scanning unit 130 checks significance of each transformation coefficient value at each position of the M×N block with regard to the transformation coefficient values of the one-dimensional array, which are scanned by the scanning unit 110, and provides information on the significance to the significance correction unit 150. Here, the significance may be determined, for example, on the basis of an absolute value of each transformation coefficient value. In this case, the significance may be determined by giving a plurality of weights to the transformation coefficient values in accordance with ranges of their absolute values. For example, a first weight is given to a transformation coefficient value having an absolute value 0, a second weight is given to a transformation coefficient value having an absolute value 1, and a third weight is given to a transformation coefficient value having an absolute value 2 or above. Here, it is preferable that the weights increase from the first weight to the third weight.

As another example, the significance may be determined on the basis of a frequency component of each transformation coefficient value. That is, a higher significance may be given to a transformation coefficient value having a low frequency component than a transformation coefficient value having a high frequency component. For example, if a position of a transformation coefficient value in a transformation block is referred to as (i, j), a fourth weight is given to a transformation coefficient value of a frequency component at the position (i, j) satisfying i<I1 and j<J1, a fifth weight is given to a transformation coefficient value of a frequency component at the position (i, j) satisfying i<I2 and j<J2, and a sixth weight is given to other transformation coefficient values of frequency components.

Alternatively, the significance may be determined by combining the weight given on the basis of an absolute value of each transformation coefficient value and the weight given on the basis of a frequency component of each transformation coefficient value.

The significance correction unit 150 includes a weight table on which a weight corresponding to the significance of each transformation coefficient value at each position of the M×N block is recorded, and corrects a weight at each position of the weight table by receiving a weight at each transformation coefficient value from the significance coefficient scanning unit 130. In more detail, weights at all positions of the weight table are corrected by receiving a weight of each transformation coefficient value and summing the weight and a corresponding weight stored in the weight table.

The scanning sequence determining unit 170 rearranges the scanning sequence from a position having a large weight to a position having a small weight on the basis of the weight table corrected by the significance correction unit 150, and the rearranged scanning sequence is used to scan a subsequent M×N block.

Meanwhile, the image entropy encoding device illustrated in FIG. 1 may operate in picture units as well as transformation block units. Here, a picture may be a frame, a field, or a slice. In picture units, a weight corresponding to significance of each transformation coefficient value is calculated in accordance with a position with regard to all transformation blocks of a picture, calculated weights of each transformation block are summed, and a scanning sequence is determined on the basis of total weights. The scanning sequence is used to encode a subsequent picture. As such, when a scanning sequence of a picture is determined, all blocks included in a picture are scanned in the same scanning sequence. Meanwhile, this scanning sequence may also be applied to a current picture. In this case, information on the scanning sequence is recorded on a header region and has to be transmitted through a bitstream. Alternatively, a plurality of scanning sequences are previously prepared in accordance with different significance characteristics such as frequency components or absolute values of transformation coefficient values and then one of the scanning sequences is determined and selectively used in block units.

FIG. 2 is a structural block diagram of an image entropy decoding device according to an embodiment of the present invention. The image entropy decoding device illustrated in FIG. 2 includes an inverse scanning unit 210, a significance coefficient scanning unit 230, a significance correction unit 250, and an inverse scanning sequence determining unit 270. Here, the inverse scanning unit 210, the significance coefficient scanning unit 230, the significance correction unit 250, and the inverse scanning sequence determining unit 270 may be implemented as at least one processor.

Referring to FIG. 2, the inverse scanning unit 210 inversely scans current transformation coefficient values of a 1 ×MN one-dimensional array in accordance with an inverse scanning sequence determined by the inverse scanning sequence determining unit 270, with reference to previous 1 ×MN one-dimensional arrays, so as to generate transformation coefficient values of an M×N block. The transformation coefficient values generated in the M×N block are used to perform inverse quantization or inverse transform. Basically, the significance coefficient scanning unit 230 checks significance of each transformation coefficient value by using the same method as the significance coefficient scanning unit 130 illustrated in FIG. 1. The significance correction unit 250 includes a weight table on which a weight corresponding to the significance of each transformation coefficient value at each position of the M×N block is recorded, and corrects a weight at each position of the weight table by receiving a weight of each transformation coefficient value from the significance coefficient scanning unit 230.

The inverse scanning sequence determining unit 270 determines the inverse scanning sequence from a position having a large weight to a position having a small weight, that is, a mapping correlation of the M×N block with regard to the 1 ×MN one-dimensional array, on the basis of the weight table corrected by the significance correction unit 250, and the determined inverse scanning sequence is used to inversely scan a subsequent 1 ×MN one-dimensional array.

According to embodiments of the image entropy encoding device illustrated in FIG. 1 and the image entropy encoding device illustrated in FIG. 2, by scanning transformation coefficient values of an MxN block from a transformation coefficient value having the highest significance to a transformation coefficient value having the lowest significance, transformation coefficient values have a value 0 from a certain position of a 1 xMN one-dimensional array and thus entropy coding efficiency may be improved. Also, a scanning pattern is determined adaptively to statistical characteristics of a given image or a residue image after prediction and thus uniform improvement of a compression rate may be guaranteed in spite of various characteristics of images.

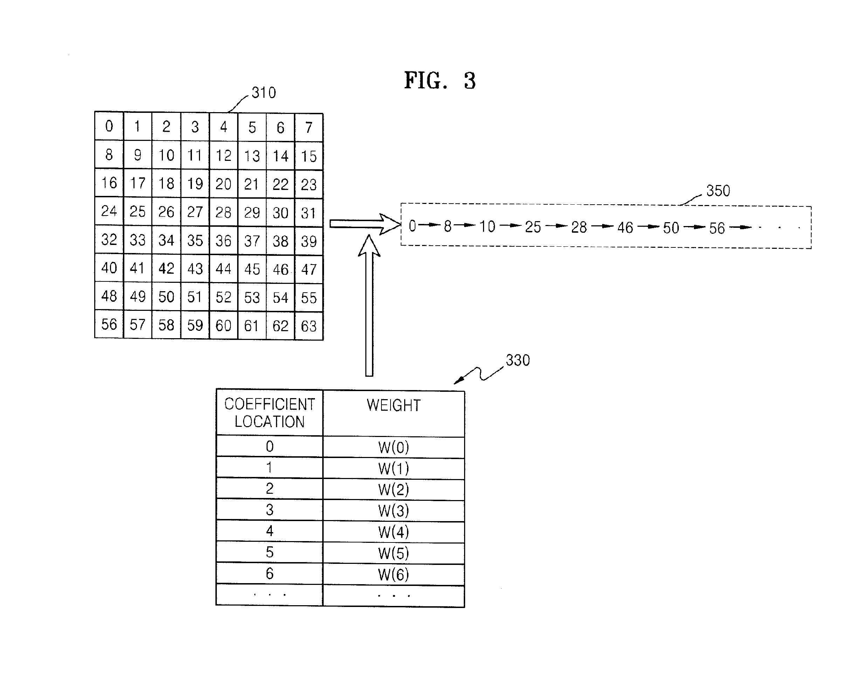

FIG. 3 is a diagram for describing operation of the scanning sequence determining unit 170 illustrated in FIG. 1, according to an embodiment of the present invention.

Referring to FIG. 3, the scanning sequence determining unit 170 determines a scanning sequence by using a weight W(i) (here, i is a position in a transformation block) representing significance of at each position of an input MxN block. In more detail, the scanning sequence is determined in accordance with a sequence of sizes of weights at corresponding positions of an 8×8 block, which are recorded on a weight table 330 that is updated by using previous 8×8 blocks. A current 8×8 block 310 is scanned from a position having the largest weight to a position having a smallest weight in accordance with the determined scanning sequence so as to generate transformation coefficient values 350 in a 1 x64 one-dimensional array. Here, if a plurality of transformation coefficient values have the same weight, a transformation coefficient value at a front position of an 8×8 block may be scanned first. Meanwhile, the inverse scanning sequence determining unit 270 illustrated in FIG. 2 may operate on the basis of a similar principal. That is, the transformation coefficient values 350 in the 1 x64 one-dimensional array is received so as to generate an 8×8 block. In more detail, a position of each of the transformation coefficient values 350 in the 1 x64 one-dimensional array is read in accordance with a sequence of sizes of weights of the weight table 330 and a transformation coefficient value may be input to a corresponding position.

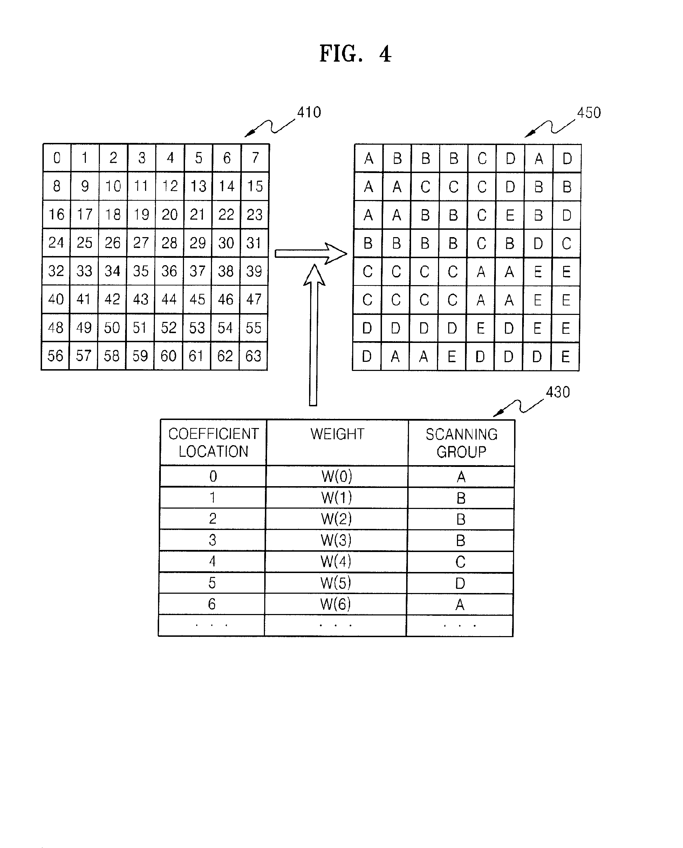

FIG. 4 is a diagram for describing operation of the scanning sequence determining unit 170 illustrated in FIG. 1, according to another embodiment of the present invention.

Referring to FIG. 4, the scanning sequence determining unit 170 determines a scanning sequence in accordance with significance in each position of an M×N block. However, the scanning sequence is not rearranged in accordance with weights. Instead, the MxN block is divided into a plurality of scanning groups in accordance with ranges of the weights, positions of transformation coefficient values are grouped in accordance with the scanning groups, and the scanning sequence is determined from a scanning group having the largest threshold value to a scanning group having the smallest threshold value. For example, a position (i) is grouped into a scanning group A if a weight W(i) at the position (i) is larger than a first threshold value Ta, and a position (i) is grouped into a scanning group B if a weight W(i) at the position (i) is larger than a second threshold value Tb and is smaller than the first threshold value Ta. In this manner, scanning groups C, D, and E may be grouped by using third and fourth threshold values Tc and Td. In this case, the scanning sequence is determined from the scanning group A to the scanning group E. In more detail, each position of an 8×8 block is grouped into a scanning group by using at least one threshold value and a weight of a transformation coefficient value at each position of previous 8×8 blocks, and the scanning group is recorded on a weight table 430. Each position of a current 8x8 block 410 is grouped in accordance with scanning groups recorded on the weight table 430 so as to generate a grouped 8×8 block 540 that is grouped into a plurality of scanning groups. The scanning sequence is ultimately determined so as to correspond to the scanning groups and weights in each scanning group. A scanning sequence of one scanning group is determined by using a basic raster scanning pattern. That is, a top line is scanned from the left to the right, and then a second top line is scanned from the left to the right, and so on. Meanwhile, if a plurality of transformation coefficient values in the same group have the same weight, a transformation coefficient value at a front position of an 8×8 block may be scanned first. Meanwhile, the inverse scanning sequence determining unit 270 illustrated in FIG. 2 may operate on the basis of a similar principal.

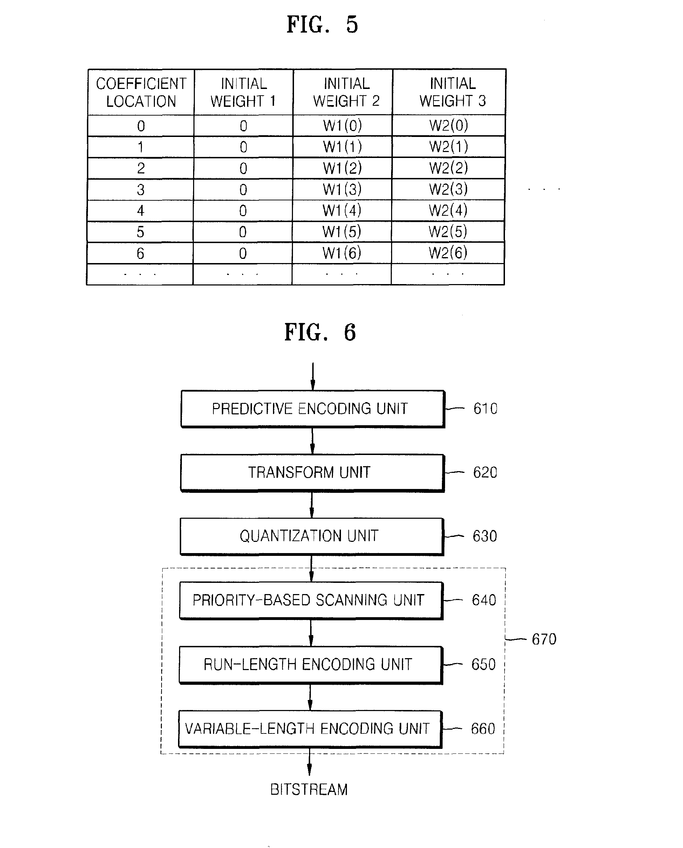

FIG. 5 is a table for describing a method of setting initial weights to be used by the significance correction unit 150 illustrated in FIG. 1 or the significance correction unit 250 illustrated in FIG. 2.

Referring to FIG. 5, the initial weights may be determined by default or by selecting one of various values such as '0', 'W1', and 'W2' in accordance with image characteristics. An initial scanning pattern may be determined in accordance with the initial weights. For example, the initial weights at all positions of an M×N block are set to have a value '0', initial scanning is performed on the basis of a raster scanning pattern in which scanning is performed in a sequence of positions of transformation coefficient values. Meanwhile, the initial weights may be set so that the initial scanning pattern has a zigzag scanning pattern. In this case, the initial weights at all positions of the M×N block are set so that the initial weights are getting reduced in a sequence of the zigzag scanning pattern, and the set initial weights are stored in a weight table. Alternatively, significance of each transformation coefficient value is previously found by checking the image characteristics, weights are given in a sequence of the significance, and the given weights may be used as the initial weights. If one or more initial weights are selectively used, information on the used initial weights is included in a bitstream so as to be transmitted. The information on the initial weights may be transmitted, for example, in group of pictures (GOP) units, picture units, frame units, slice units, or macroblock units in a case of a video image and, for example, in group of blocks (GOB) units in a case of a still image. If the initial weights are input to the significance correction unit 150 or the significance correction unit 250 in certain units, weights at all positions of the M×N block are initialized so as to correspond to the initial weights.

FIG. 6 is a structural block diagram of an image encoding device according to an embodiment of the present invention. The image encoding device illustrated in FIG. 6 includes a predictive encoding unit 610, a transformation unit 620, a quantization unit 630, and an entropy encoding unit 670. Here, the entropy encoding unit 670 includes a significance-based scanning unit 640, a run-length encoding unit 650, and a variable-length encoding unit 660. The significance-based scanning unit 640 may have the configuration illustrated in FIG. 1. Meanwhile, the predictive encoding unit 610, the transformation unit 620, the quantization unit 630, and the entropy encoding unit 670 may be implemented as at least one processor.

Referring to FIG. 6, the predictive encoding unit 610 performs temporal/spatial predictive encoding on an input image so as to generate residual data. Here, the input image may be any one of a still image and a video image.

The transformation unit 620 transforms the residual data so as to generate transformation coefficient values in M×N block units. The quantization unit 630 quantizes the transformation coefficient values in M×N block units.

The entropy encoding unit 670 determines a scanning sequence on the basis of significance in each position of an MxN block, scans transformation coefficient values of a quantized M×N block in the determined scanning sequence, and generates transformation coefficient values of a 1 ×MN one-dimensional array. The transformation coefficient values of the 1 xMN one-dimensional array are run-length encoded so as to generate run-length symbols, and the run-length symbols are variable-length encoded so as to be mapped to codewords. Accordingly, a bitstream is generated.

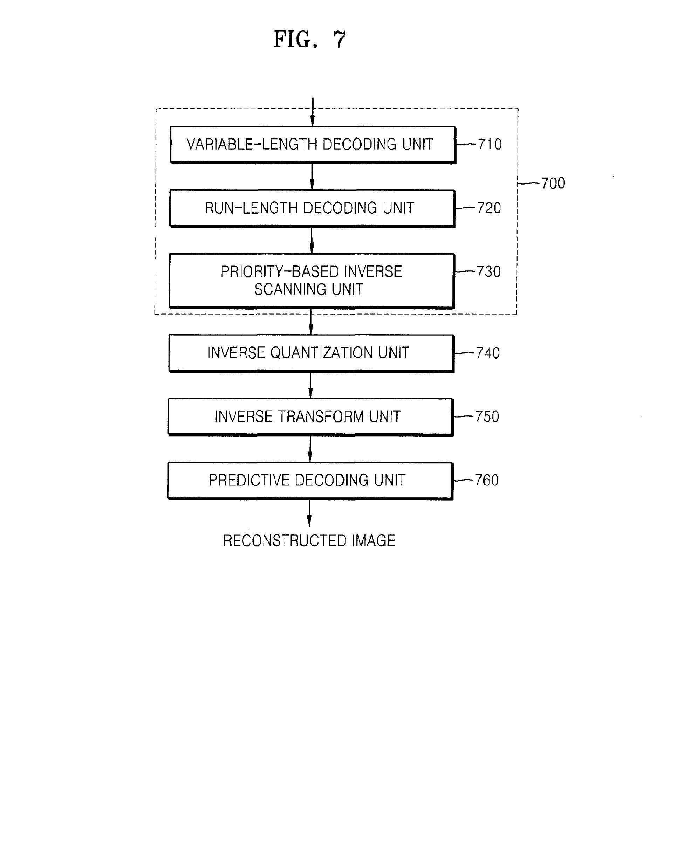

FIG. 7 is a structural block diagram of an image decoding device according to an embodiment of the present invention. The image decoding device illustrated in FIG. 7 includes an entropy decoding unit 700, an inverse quantization unit 740, an inverse transformation unit 750, and a prediction decoding unit 760. Here, the entropy decoding unit 700 includes a variable-length decoding unit 710, a run-length decoding unit 720, and a significance-based inverse scanning unit 730. The significance-based inverse scanning unit 730 may have the configuration illustrated in FIG. 2. Meanwhile, the entropy decoding unit 700, the inverse quantization unit 740, the inverse transformation unit 750, and the prediction decoding unit 760 may be implemented as at least one processor.

Referring to FIG. 7, the entropy decoding unit 700 performs variable-length decoding on a bitstream so as to restore run-length symbols, and performs run-length decoding on the restored run-length symbols so as to restore quantized transformation coefficient values of a 1 ×MN one-dimensional array. An inverse scanning sequence is determined on the basis of significance in each position of an MxN block and the quantized transformation coefficient values of the 1 xMN one-dimensional array are inversely scanned in the determined inverse scanning sequence. Accordingly, quantized transformation coefficient values of the MxN block are generated.

The inverse quantization unit 740 inversely quantizes the quantized transformation coefficient values of the M×N block so as to restore transformation coefficient values of the M×N block. The inverse transformation unit 750 inversely transforms the transformation coefficient values so as to restore residual data. The prediction decoding unit 760 performs temporal/spatial prediction decoding on the residual data so as to generate a reconstructed image.

Examples of the image encoding device illustrated in FIG. 6 and the image decoding device illustrated in FIG. 7, excepting the entropy encoding unit 670 illustrated in FIG. 6 and the entropy decoding unit 700 illustrated in FIG. 7, are H.264, MPEG-2, and MPEG-4 codecs which are general image codecs adopting motion compensation technology.

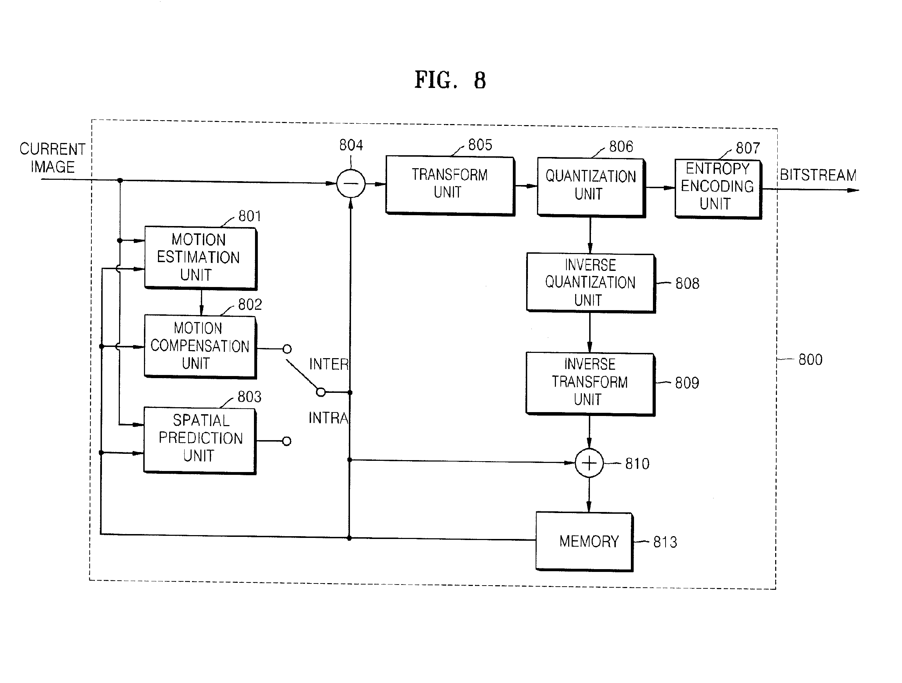

FIG. 8 is a structural block diagram of an image encoding device according to another embodiment of the present invention. The image encoding device illustrated in FIG. 8 includes a motion estimation unit 801, a motion compensation unit 802, a spatial prediction unit 803, a subtracter 804, a transformation unit 805, a quantization unit 806, an entropy encoding unit 807, an inverse quantization unit 808, an inverse transformation unit 809, an adder 810, and a memory 813. Here, the entropy encoding unit 807 may be implemented as the significance-based scanning unit 640, the run-length encoding unit 650, and the variable-length encoding unit 660 illustrated in FIG. 6. Meanwhile, the motion estimation unit 801, the motion compensation unit 802, the spatial prediction unit 803, the subtracter 804, the inverse quantization unit 808, the inverse transformation unit 809, the adder 810, and the memory 813 are regarded to correspond to the predictive encoding unit 610 illustrated in FIG. 6.

Referring to FIG. 8, the motion estimation unit 801 estimates motion of a current image included in an image sequence, on the basis of at least one reference image stored in the memory 813. In more detail, the motion estimation unit 801 determines a block of the reference image, which the mostly matches each inter-mode block of the current image, and calculates a motion vector representing displacement between the determined block of the reference image and the inter-mode block of the current image.

The motion compensation unit 802 generates a prediction image of the current image from at least one reference image by using motion estimation results of the motion estimation unit 801. In more detail, the motion compensation unit 802 generates the prediction image of the current image by using blocks of at least one reference block, which are indicated by motion vectors of inter-mode blocks of the current image, which are calculated by the motion estimation unit 801.

The spatial prediction unit 803 predicts each intra-mode block of the current image from neighboring blocks of the intra-mode block, which are included in at least one reference image stored in the memory 813, so as to generate a prediction image of the current image.

The subtracter 804 subtracts the prediction image generated by the motion compensation unit 802 or the spatial prediction unit 803 from the current image so as to generate a residue image between the current image and the prediction image.

The transformation unit 805 transforms the residue image generated by the subtracter 804 from the space domain to the frequency domain. For example, the transformation unit 805 may transform the residue image generated by the subtracter 804 from the space domain to the frequency domain by using a DHT method or a DCT method. The quantization unit 806 quantizes transform results of the transformation unit 805. In more detail, the quantization unit 806 divides the transform results that are frequency components, by a quantization step-size and approximates the divided frequency components to integers.

The entropy encoding unit 807 performs entropy encoding on quantization results of the quantization unit 806 so as to generate a bitstream. For example, the entropy encoding unit 807 may perform the entropy encoding on the quantization results of the quantization unit 806 by using a context-adaptive variable-length coding (CAVLC) method or a context-adaptive binary arithmetic coding (CABAC) method. In particular, in addition to the quantization results of the quantization unit 806, the entropy encoding unit 807 also performs the entropy encoding on information required for decoding, such as index information of a reference image that is used to perform temporal prediction, motion vector information, and position information of blocks of a reconstructed image that is used to perform spatial prediction.

The inverse quantization unit 808 inversely quantizes the quantization results of the quantization unit 806. In more detail, the inverse quantization unit 808 restores the frequency components by multiplying the integers approximated by the quantization unit 806, by the quantization step-size. The inverse transformation unit 809 transforms inversely transform results of the inverse quantization unit 808, which are frequency components, from the frequency domain to the space domain, so as to restore the residue image between the current image and the prediction image. The adder 810 adds the residue image restored by the inverse transformation unit 809 to the prediction image generated by the motion compensation unit 802 or the spatial prediction unit 803, so as to generate the reconstructed image of the current image and to store the reconstructed image in the memory 813. The reconstructed image is used as a reference image of subsequent or previous images of the current image.

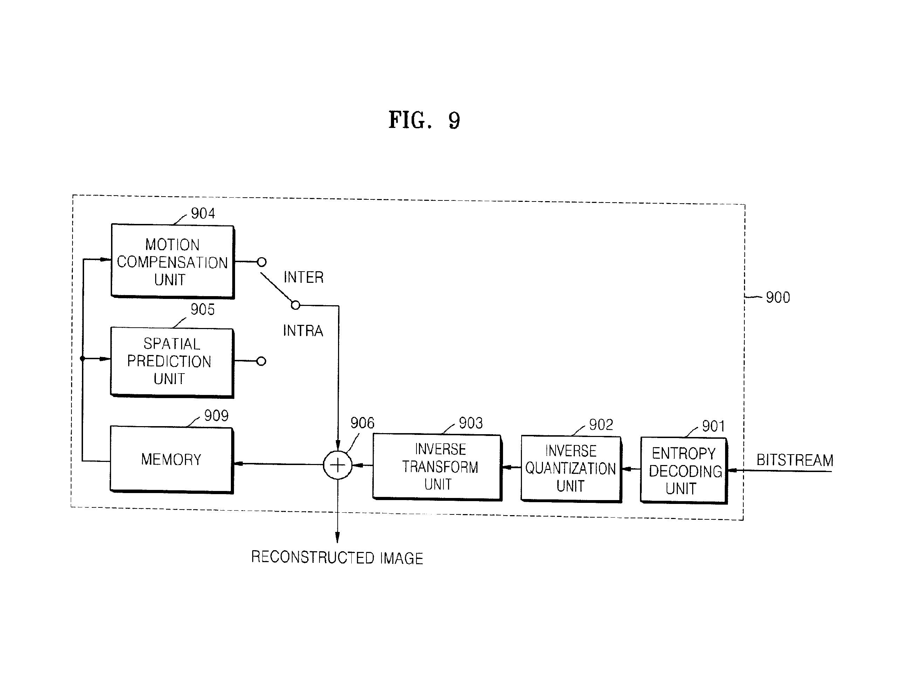

FIG. 9 is a structural block diagram of an image decoding device according to another embodiment of the present invention. The image decoding device illustrated in FIG. 9 includes an entropy decoding unit 901, an inverse quantization unit 902, an inverse transformation unit 903, a motion compensation unit 904, a spatial prediction unit 905, an adder 906, and a memory 909. Here, the entropy decoding unit 901 may be implemented as the variable-length decoding unit 710, the run-length decoding unit 720, and the significance-based inverse scanning unit 730 illustrated in FIG. 7. Meanwhile, the motion compensation unit 904, the spatial prediction unit 905, the adder 906, and the memory 909 are regarded to correspond to the prediction decoding unit 760 illustrated in FIG. 7. Image restoration operation of the image decoding device illustrated in FIG. 9 is the same as the image restoration operation of the image encoding device illustrated in FIG. 8. Thus, although omitted, descriptions which are made above with reference to the image encoding device illustrated in FIG. 8 are also applied to the image decoding device illustrated in FIG. 9.

Referring to FIG. 9, the entropy decoding unit 901 performs entropy decoding on a bitstream generated by the image encoding device illustrated in FIG. 8, so as to restore, for example, information required for decoding and integers of image data. The inverse quantization unit 902 inversely quantizes the integers restored by the entropy decoding unit 901 so as to restore frequency components. The inverse conversion unit 903 transforms the frequency components restored by the inverse quantization unit 902 from the frequency domain to the time domain so as to restore a residue image between a current image and a prediction image.

The motion compensation unit 904 generates a prediction image of the current image from at least one reference image stored in the memory 909 by using motion vectors. The spatial prediction unit 905 predicts each intra-mode block of the current image from neighboring blocks of the intra-mode block, which are included in at least one reference image stored in the memory 909, so as to generate a prediction image of the current image. The adder 906 adds the residue image restored by the inverse transformation unit 903 to the prediction image generated by the motion compensation unit 904 or the spatial prediction unit 905, so as to generate a reconstructed image of the current image.

Meanwhile, embodiments of the present invention can be written as computer programs and can be implemented in general-use digital computers that execute the programs using a computer readable recording medium. Also, the data structure used in the embodiments of the present invention described above can be recorded on a computer readable recording medium via various means. Examples of the computer readable recording medium include magnetic storage media (e.g., ROM, floppy disks, hard disks, etc.), optical recording media (e.g., CD-ROMs, or DVDs), etc.

While the present invention has been particularly shown and described with reference to exemplary embodiments thereof, it will be understood by one of ordinary skill in the art that various changes in form and details may be made therein without departing from the spirit and scope of the invention as defined by the following claims. The exemplary embodiments should be considered in a descriptive sense only and not for purposes of limitation. Therefore, the scope of the invention is defined not by the detailed description of the invention but by the following claims, and all differences within the scope will be construed as being included in the present invention.

## Claims

1. An image entropy encoding device comprising:
a scanning unit to scan transformation coefficient values of a transformation block in accordance with a scanning sequence so as to arrange the transformation coefficient values in a one-dimensional array;
a significance coefficient scanning unit to check significance of the transformation coefficient values of the one-dimensional array;
a significance correction unit to correct weights of the transformation coefficient values in accordance with positions, by using the significance checked by the significance coefficient scanning unit; and
a scanning sequence determining unit to determine the scanning sequence from a position having a large weight to a position having a small weight in the transformation block, on the basis of the corrected weights.

2. The image entropy encoding device of claim 1, wherein the significance coefficient scanning unit determines the significance by giving a weight on the basis of an absolute value of each transformation coefficient value.

3. The image entropy encoding device of claim 1, wherein the significance coefficient scanning unit determines the significance by giving a weight on the basis of a frequency component of each transformation coefficient value.

4. The image entropy encoding device of claim 1, wherein the scanning sequence determining unit groups a position of each transformation coefficient value of the transformation block into one of a plurality of scanning groups by using the corrected weights and a plurality of threshold values, and determines the scanning sequence of the scanning groups from a scanning group having a large weight to a scanning group having a small weight.

5. The image entropy encoding device of claim 4, wherein, if a plurality of positions in the same scanning group have the same weight, transformation coefficient values at the positions are scanned in accordance with a raster scanning sequence.

6. The image entropy encoding device of claim 1, wherein the significance correction unit has initial weights, and information on the initial weights is transmitted in a bitstream.

7. The image entropy encoding device of claim 6, wherein the information on the initial weights is transmitted in one of sequence units, picture units, frame units, and block units.

8. An image entropy decoding device comprising:
an inverse scanning unit to inversely scan transformation coefficient values of a one-dimensional array, which are restored from a bitstream, in accordance with an inverse scanning sequence so as to generate quantized transformation coefficient values of a transformation block;
a significance coefficient scanning unit to check significance of the quantized transformation coefficient values of the transformation block;
a significance correction unit to correct weights of the transformation coefficient values in accordance with positions, by using the significance checked by the significance coefficient scanning unit; and
an inverse scanning sequence determining unit to determine the inverse scanning sequence from a position having a large weight to a position having a small weight in the transformation block, on the basis of the corrected weights.

9. The image entropy decoding device of claim 8, wherein the significance coefficient scanning unit determines the significance by giving a weight on the basis of an absolute value of each transformation coefficient value.

10. The image entropy decoding device of claim 8, wherein the significance coefficient scanning unit determines the significance by giving a weight on the basis of a frequency component of each transformation coefficient value.

11. The image entropy decoding device of claim 8, wherein the inverse scanning sequence determining unit groups a position of each transformation coefficient value of the transformation block into one of a plurality of scanning groups by using the corrected weights and a plurality of threshold values, and determines the inverse scanning sequence of the scanning groups from a scanning group having a large weight to a scanning group having a small weight.

12. The image entropy decoding device of claim 11, wherein, if a plurality of positions in the same scanning group have the same weight, transformation coefficient values at the positions are scanned in accordance with a raster scanning sequence.

13. The image entropy decoding device of claim 8, wherein the significance correction unit has initial weights, and information on the initial weights is transmitted in a bitstream.

14. The image entropy decoding device of claim 13, wherein the information on the initial weights is transmitted in one of sequence units, picture units, frame units, and block units.

15. An image decoding device comprising:
an entropy decoding unit to perform entropy decoding on a bitstream so as to restore quantized transformation coefficient values of a one-dimensional array, to determine an inverse scanning sequence on the basis of significance in each position of a transformation block, and to inversely scan the quantized transformation coefficient values of the one-dimensional array in the determined inverse scanning sequence so as to generate quantized transformation coefficient values of the transformation block;
an inverse quantization unit to inversely quantize the quantized transformation coefficient values of the transformation block so as to restore transformation coefficient values of the transformation block;
an inverse transformation unit to inversely transform the transformation coefficient values of the transformation block so as to restore a residue image; and
a prediction decoding unit to perform prediction decoding on the residue image so as to generate a reconstructed image.

16. The image entropy decoding device of claim 15, wherein the entropy decoding unit comprises:
a variable-length decoding unit to perform variable-length decoding on a bitstream so as to restore run-length symbols;
a run-length decoding unit to perform run-length decoding on the run-length symbols so as to restore transformation coefficient values of the one-dimensional array; and
a significance-based inverse scanning unit to correct weights of a current transformation block in accordance with positions from information on significance of transformation coefficient values of at least one previous transformation block, to determine an inverse scanning sequence of the transformation coefficient values of the current transformation block on the basis of the corrected weights, and to inversely scan the transformation coefficient values of the one-dimensional array in accordance with the determined inverse scanning sequence so as to generate the transformation coefficient values of the current transformation block.

17. The image entropy decoding device of claim 16, wherein the significance-based inverse scanning unit groups a position of each transformation coefficient value of the transformation block into one of a plurality of scanning groups by using the corrected weights and a plurality of threshold values, and determines the inverse scanning sequence of the scanning groups from a scanning group having a large weight to a scanning group having a small weight.

18. The image entropy decoding device of claim 17, wherein, if a plurality of positions in the same scanning group have the same weight, transformation coefficient values at the positions are inversely scanned in accordance with a raster scanning sequence.

19. The image entropy decoding device of claim 16, wherein the significance-based inverse scanning unit has initial weights, and information on the initial weights is transmitted in a bitstream.

20. The image entropy decoding device of claim 19, wherein the information on the initial weights is transmitted in one of sequence units, picture units, frame units, and block units.
